# EUROPÄISCHE PATENTSCHRIFT

(11) **EP 1 776 571 B1**
(45) Veröffentlichungstag und Bekanntmachung des Hinweises auf die Patenterteilung: **27.07.2011**
(21) Anmeldenummer: 05771116.0
(22) Anmeldetag: 05.08.2005
(51) Int. Cl.: G01L 5/24

(54) **VERFAHREN ZUR BESTIMMUNG DER VORSPANNKRAFT VON VERBINDUNGSBAUTEILEN DURCH ULTRASCHALLANREGUNG**
METHOD FOR DETERMINING THE PRE-TENSIONING FORCE OF CONNECTION COMPONENTS BY ULTRASOUND EXCITATION
PROCEDE PERMETTANT DE DETERMINER LA FORCE DE PRETENSION DE COMPOSANTS DE LIAISON PAR EXCITATION PAR ULTRASONS

(30) Priorität: 09.08.2004 DE 102004038638
(43) Veröffentlichungstag der Anmeldung: 25.04.2007
(73) Patentinhaber: Intellifast GmbH, 67346 Speyer (DE)
(72) Erfinder: ADLHOCH, Gustav, 67373 Dudenhofen (DE); GRILL, Wolfgang Inst. für Experimental Physik II,, 04103 Leipzig (DE); KOCIORSKI, Reinhold, 67346 Speyer (DE)
(74) Vertreter: Hörschler, Wolfram Johannes
(86) Internationale Anmeldenummer: PCT/EP2005/008516
(87) Internationale Veröffentlichungsnummer: WO 2006/015813

(56) Entgegenhaltungen:
- EP-A- 0 453 650
- FR-A- 2 655 144
- FR-A- 2 844 876

## Beschreibung

### Technisches Gebiet

Mechanische Verbindungsbauteile wie zum Beispiel Schrauben oder Bolzen werden mittels Ultraschall-Messverfahren auf ihre Vorspannkraft hin überprüft. Dazu wird die Signallaufzeit von Ultraschallwellen, die mit einer oder mehreren separaten, häufig vordefinierten Arbeitsfrequenzen in das jeweilige Verbindungsbauteil eingekoppelt werden, vermessen. Im Zuge der fortschreitenden Materialwissenschaften sind in den letzten Jahren eine Vielzahl von Verbund- und gradierten Werkstoffe sowie Speziallegierungen eingeführt worden, aus denen Verbindungsbauteile wie Bolzen oder Schrauben gefertigt werden können, deren Materialeigenschaften höhere Anforderungen an ein Messverfahren zur Bestimmung der Vorspannkraft stellen.

### Stand der Technik

Bei bisher bekannten Ultraschall-Messverfahren werden zur Bestimmung von beispielsweise der Schraubenvorspannkraft einer als Verbindungsbauteil eingesetzten Schraube die Signallaufzeit von Ultraschallwellen mit einer oder mehreren, separaten häufig vordefinierten Arbeitsfrequenzen vermessen.

Eine Anwendung der bekannten Ultraschall-Messverfahren auf die in den letzten Jahren eingeführten Verbund- und gradierten Werkstoffe sowie Speziallegierungen, die aus dem Fortschritt in den Materialwissenschaften herrühren, versagt häufig, weil unter erhöhter Vorspannkraft oder bei Verbiegung längerer Schrauben im gewünschten Ziellastbereich sich das vom Material des Verbindungselementes durchgelassene Ultraschallfrequenzspektrum stark verändert und oft ganze Frequenzbänder ausfallen und für die Vermessung nicht mehr zur Verfügung stehen. Dies führt dazu, dass diese Messverfahren, die auf fest vordefinierten Frequenzen und/oder auf engen Frequenzbereichen beruhen, beim Wegfall einer oder mehrerer Frequenzbereiche unbrauchbare Ergebnisse liefern.

Bei bekannten Verfahren der Spannkraftmessung mittels Ultraschall-Echoverfahren werden zum Beispiel Mehrfrequenzverfahren mit zwei Frequenzen eingesetzt. Diese haben den Nachteil, dass, bedingt durch die Eigenschaften des Materials einer Schraube oder eines Bolzens, im Bereich der Schalllaufstrecke an Korngrenzen oder anderen Materialstrukturen Reflexionen auftreten und zu destruktiven Interferenzen für die eingesetzten Arbeitsfrequenzen führen können. Bei der Veränderung von Schrauben oder Bolzen durch die auf diese jeweils wirkende Spannkraft können sich zudem die Materialeigenschaften so verändern, dass die ohne Vorliegen einer Spannkraft noch beobachtbaren Signale bei den gewählten Arbeitsfrequenzen bei einer bereits anliegenden, sowie im Falle einer variablen Spannkraft nicht oder nur noch unzureichend beobachtet werden können. Damit verschlechtert sich bei Erhöhung der Spannkraft im Verbindungsbauteil die Auflösung bei der Laufzeitmessung oder die Messung der Laufzeit des eingekoppelten Ultraschallechos wird sogar unmöglich.

Bei bekannten Verfahren, die auf der Anregung mit kurzen Pulsen oder Flanken beruhen (stufenförmige Signale), wird wegen der bei kurzen Signalen auftretenden, entsprechend großen Bandbreite ein breitbandiges Signal eingesetzt. Dieses kann aber wegen der Spannungsbegrenzung im Hinblick auf die Signalamplituden oder die Signalleistung bei der Erzeugung oder wegen Einschränkungen bei der Detektion kleiner Signale nach der Anregung auf der gleichen Leitung nur unvorteilhaft genutzt werden. Der Grund dafür liegt darin, dass mit einer Erhöhung der Sendeleistung durch dafür erforderliche Verstärkung auch eine für die Detektion mit optimalem Signal-zu-Rausch-Verhältnis abträgliche Erhöhung des Rauschpegels verbunden ist. Ferner können bei höheren Signalspannungen nur weniger vorteilhafte Schalter oder Eingangsverstärker genutzt werden. Ferner ist zu berücksichtigen, dass für Verstärker zur Erhöhung der Sendeleistung relativ hohe Kosten aufgewendet werden müssen, um mit solchen Komponenten hohe Spannungen beziehungsweise hohe Leistungen bereitzustellen.

Aus DE 42 24 035 A1 sowie DE 42 32 254 A1 ist ein Ultraschall-Prüfverfahren bekannt. Gemäß dieses Verfahrens wird zur Ansteuerung eines in einer Übertragungsstrecke angeordneten Ultraschallwandlers ein frequenzmoduliertes Chirp-Signal x(t) vorgesehen, dessen momentane Frequenz f nicht linear mit der Zeit t moduliert wird. Der zeitliche Verlauf f(t) der momentanen Frequenz f des frequenzmodulierten Chirp-Signals x(t) an die

Übertragungsfunktion H(f) ist an die vorgegebene Übertragungsstrecke angepasst. Zeitliche Änderungen der momentanen Frequenz f des frequenzmodulierten Chirp-Signals x(t) sind derart mit dem zu dieser Frequenz f gehörenden Wert der Übertragungsfunktion H(f) der Übertragungsstrecke korreliert, dass bei Frequenzen f mit niedrigem zugehörigen Wert der Übertragungsfunktion H(f) die Geschwindigkeit der Frequenzänderung kleiner ist als bei Frequenzen f mit hohem zugehörigen Wert der Übertragungsfunktion H(f). Zur Ansteuerung des Ultraschallwandlers ist gemäß den Lösungen aus DE 42 24 035 A1 und DE 42 32 254 A1 ein rechteckförmiges Chirp-Signal x'(t) vorgesehen. Es wird ein Signalgenerator zur Ansteuerung des Ultraschallwandlers mit einem frequenzmodulierten Chirp-Signal x(t) eingesetzt, dessen momentane Frequenz f nicht linear von der Zeit abhängt und ein Pulskompressionsfilter, der zum Umwandeln des von diesem oder einem anderen Ultraschallwandler empfangenen Chirp-Signals y(t) in einen kurzen Empfangsimpuls z(t) dient.

### Darstellung der Erfindung

Um die Vorteile einer gepulsten Anregung, d.h. die Breitbandigkeit, als auch die Amplitude (Spannung) bei der elektrischen Anregung des Verbindungsbauteils in vorteilhafter Weise klein halten zu können, wird erfindungsgemäß vorgeschlagen, das Verbindungsbauteil, wie zum Beispiel eine Schraube oder einen Bolzen, breitbandig zeitlich ausgedehnt, jedoch in der Länge zur Beobachtung von Echos anpassbar anzuregen. Es ist zwar bekannt, eine gepulste Anregung breitbandig vorzunehmen, jedoch sind die Vorteile bisher nicht erkannt, da mit kurzen Pulsen oder Stufensignalen die Ausgangsleistung (d.h. Leistung des Ausgangsverstärkers) nicht optimal ausnutzbar ist, da die Breitbandigkeit über extrem kurze Signalabschnitte (kurze Pulse, kleine Stufen) erzeugt wird.

Mittels eines digital programmierbaren Arbiträrgenerators (arbitrary function generator), der hinsichtlich der Signalform manipulierbar ist, wird eine zeitlich begrenzte gepulste Anregung mit geeignet vorgegebener Pulsbreite mit einem determinierten, zeitlich veränderlichen Verlauf gewählt (wie z.B. breitbandiges Rauschen). Es kann z.B. ein breitbandiges Rauschen gewählt werden, das so strukturiert ist, dass unter Berücksichtigung der nutzbaren Bandbreite von eingesetzten Transducern alle Frequenzen mit etwa gleicher Amplitude enthalten sind. An dieser Stelle sei auf die Publikation "An Ultrasonic Pseudorandom Signal-Correlation System, Charles M. Elias in IEEE Transactions on Sonics and Ultraconics, Vol. SU-27, No. 1, January 1980, Seiten 1 bis 6, verwiesen. Dies bedeutet, dass mit dem Ultraschallanregungspuls ein maximal anregbares Ultraschallfrequenzspektrum angeregt wird, in welchem so viele Frequenzen, wie durch die Pulsbreite und obere gewählte Grenzfrequenz möglich, angeregt werden. Dies kann auch durch anders strukturierte Pulse als das oben genannte breitbandige Rauschen erfolgen, wie z.B. aus "Radar Design Principles", signal processing and the environment, Fred E. Nathanson, J. Patrick Reilly und Marvin N. Cohen, McGraw-Hill, Inc., New York, St. Louis, San Francisco, 1991, 1969, ISBN 0-07-046052-3, Kapitel 8, Seite 351 ff. bekannt. Aufgrund des Umstandes, dass ein zeitlich ausgedehntes Signal eingesetzt wird, ist in vorteilhafter Weise ein relativ hoher Leistungseintrag bei relativ geringer Signalamplitude in das Verbindungsbauteil möglich. Bei Anwendung des erfindungsgemäß vorgeschlagenen Verfahrens werden üblicherweise Spannungen zwischen 2 V und 5 V in der Praxis eingesetzt, während bei bekannten Verfahren die Spannungswerte typischerweise bei 100 V liegen und eine 400-fach höhere Leistung benötigt wird. Durch die Breitbandigkeit ist außerdem das erfindungsgemäß vorgeschlagene Verfahren stabil gegenüber sich durch die Vorspannung des Verbindungsbauteils ergebender Änderungen seiner Materialeigenschaften im Hinblick auf eine Dämpfung oder den kompletten Ausfall einzelner Frequenzbereiche, da das Ultraschallfrequenzspektrum so viele Frequenzbereiche wie möglich anregt.

Die Ultraschallsignale sind bei dem oben genannten Beispiel so gewählt, dass die Amplituden beziehungsweise die Leistung in allen Frequenzbereichen integriert mit über die Pulsbreite möglichst ausgeglichen verläuft. Dabei variiert im Falle des breitbandigen Rauschens die Phasenlage statistisch oder verändert sich bei anderen Signalen in vorgegebener stetiger Weise. Durch die vorgegebene oder gewählte Bandbreite, von der die Anstiegs- und die Abfallzeit des Pulses begrenzt ist, wird so z.B. ein breitbandiger Puls mit rauschendem Signal bei zeitlich annähernd rechteckförmiger (bezogen auf den Zeitbereich) gepulster Leistungsverteilung erzeugt.

Da die in das Verbindungsbauteil, wie zum Beispiel eine Schraube oder einen Bolzen, eingekoppelten Signale mit festgelegter, jedoch über die Frequenzbereiche variierender Phasenlage erzeugt werden, stehen die Phaseninformationen zusammen mit den Amplitudeninformationen in Abhängigkeit von der Frequenz zur Verfügung, so dass diese bei der Auswertung der detektierten Echosignale genutzt werden können. An dieser Stelle sei auf die Literaturstelle "Radar Design Principles", ", signal processing and the environment, Fred E. Nathanson, J. Patrick Reilly und Marvin N. Cohen, McGraw-Hill, Inc., New York, St. Louis, San Francisco, 1991, 1969, ISBN 0-07-046052-3, dort Kapitel 12, Seiten533 bis 582 verwiesen.

Echosignale werden bei der Detektion zur Pulskompression genutzt. Anders als bei analogen Verfahren erfolgt die Pulskompression hier nach der Digitalisierung der Verfahren mittels einer geeigneten Software rechnerbasiert.

Der Vorteil der Anregung beispielsweise mit einem Pseudo-Random Noise-Signal oder mit Signalen mit statistischer Phasenlage bei der Messung der Vorspannkraft in Verbindungsbauteilen wie z.B. Schrauben liegt darin, dass die Schrauben durch fertigungsbedingte Streuungen bei der Herstellung und unvorhersehbare Veränderungen des Frequenz- und des Phasengangs beim Anziehvorgang systematische, aber nicht vorhersehbare Laufzeitänderungen und Reflexe der Ultraschallsignale bewirken, die zu unvorhersehbaren schädlichen Konstruktions- und Rekonstruktionsinterferenzen führen, die die Messung stören. Bei unvorhersehbaren Störungen wird ein statistisch verteiltes Eingangssignal (Pseudo-Random-Noise) oder ein pseudo-statistisches Eingangssignal zur Minimierung solcher sich ergebenden Interferenzen eingesetzt. Der dadurch erzielte Vorteil bei der Messung und für die Sicherheit ist insbesondere bei sicherheitsrelevanten kritischen Schraubenverbindungen wie z.B. in der Luftfahrt signifikant.

Daneben eignet sich in vorteilhafter Weise als Anregungssignal der lineare Chirp, da viele der in Verbindungsbauteilen wie etwa Schrauben beobachtenden Störungen und Interferenzen bei diesem Verfahren noch zu vorteilhafte n Ergebnissen führen.

### Zeichnung

Anhand der Zeichnung wird das erfindungsgemäß vorgeschlagene Verfahren detaillierter beschrieben.

Es zeigt:

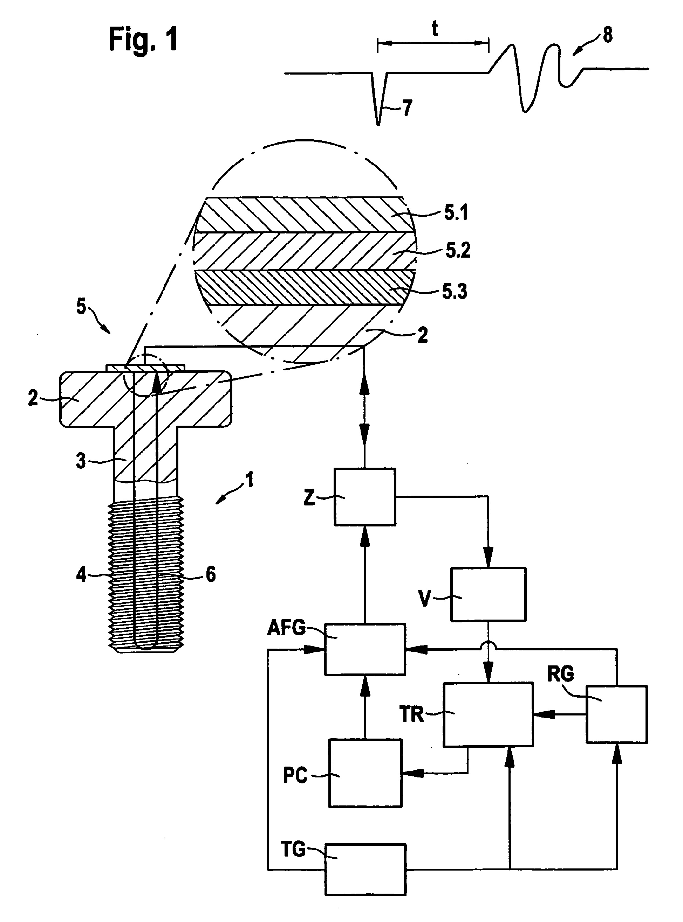

- Figur 1: eine Ausführungsvariante eines Ultraschallmesssystems mit einem Zirkulator, Schalter oder ein Reflektometer oder eine elektrische Verbindung.

### Ausführungsvarianten

Der Darstellung gemäß Figur 1 ist in schematischer Weise eine Ausführungsvariante eines Ultraschallmesssystems für Verbindungsbauteile, wie zum Beispiel Schrauben zu entnehmen. Ein mit Bezugszeichen Z bezeichnetes Bauteil kann entweder als ein Zirkulator, als ein Schalter, als ein Reflektometer oder als eine elektrische Verbindung dargestellt werden.

Unter "Pseudo-Random Noise" (prn) wird nachfolgend ein Signal verstanden, welches ein oder mehrere Tests für statistische Verteilung erfüllt. Obwohl dem Signal ein definiertes Muster zu fehlen scheint, enthält ein Pseudo-Random Noise-Signal eine Frequenz von Pulsen, die sich wiederholen, jedoch erst nach einer längeren Zeit oder einer längeren Pulsfolge.

Das als Schraube ausgebildete Verbindungsbauteil 1 gemäß der Darstellung in Figur 1 umfasst einen Schraubenkopf 2 sowie einen Schaft 3. Unterhalb des Schaftes 3 verläuft ein Gewindeteil 4. Auf dem Schraubenkopf 2 befindet sich ein Transducer 5 für einen Ultraschallpuls 7, der als Chirp-Puls ausgebildet ist. Bei Chirp-Pulsen handelt es sich um Pulse, wie zum Beispiel lineare Chirp-Pulse, die Frequenzen aufweisen, deren Schwerpunkt mit dem Abstand vom Pulsbeginn abhängig von der Frequenz linear ansteigt oder abfällt. Mit dem Chirpverfahren lässt sich bei der Detektion eine zeitliche Kompression erreichen, wobei eine für den Transducer minimale Pulsbreite erreicht wird. Ferner ist eine Deltapulserzeugung aus frequenzbegrenzten Signalspektren denkbar, durch Überlagerung vieler sinus- oder cosinusförmiger Partialwellen um die Phase 0° beziehungsweise 180° (π) im Falle der cosinus-Funktion. Im allgemeinsten Falle lassen sich die Signalkomponenten durch eine e-Funktion der Form e^{(jωt)} darstellen. Je mehr Frequenzen bei der Anregung beteiligt sind, desto stärker ist das nach der Kompression zu beobachtende Maximum beziehungsweise die Ausprägung des Maximums. Die Kompression erfolgt nach der Digitalisierung des empfangenen Signals über Rechner und Rechnerprogramme. Dabei wird das empfangene Signal zuerst fourier-transformiert. Dann werden die spektralen Komponenten in der Phase so verschoben, dass sich bei einer Darstellung über cosinus-Funktionen für einen mit Bezug zum Anregungszeitpunkt festgelegten Zeitpunkt bei Abwesenheit der Vorspannkraft die Phasenlage 0 ergibt. Dadurch entsteht nach der Rücktransformation an diesem Zeitpunkt ein komprimierter Puls mit markanter maximaler Amplitude. Die Position des vom Betrag her maximalen Signals wird durch Anpassung einer Halbwelle in der Umgebung dieses Maximums bestimmt. Die Verschiebung der spektralen Komponenten und die Form der Anpassfunktion werden für das jeweilige Verbindungsbauteil 1 für alle Vorspannkräfte gleich gewählt. Die Laufzeitdifferenzen, die zur Bestimmung der Vorspannkraft benutzt werden, ergeben sich durch Differenzbildung der Messung des Ergebnisses aus der Messung ohne Vorspannkraft. Der Zusammenhang zwischen Vorspannkraft und den beobachteten Laufzeitdifferenzen für das jeweilige Verbindungsbauteil 1 oder ein Los desselben wird empirisch mit Zugmaschinen, welche die genaue Aufprägung einer Spannkraft erlauben, festgestellt. Mit dem so festgestellten Zusammenhang wird die jeweilige Einzelmessung ausgewertet und die Spannkraft angezeigt.

Der Transducer 5 gemäß Figur 1 umfasst eine Elektrode 5.1, an welcher die Signalleitung angeschlossen ist sowie eine darunter liegende Schutzschicht 5.2. Unterhalb der Schutzschicht 5.2 und der Oberseite des Schraubenkopfes 2 befindet sich ein piezoelektrischer Dünnfilm 5.3. Durch Bezugszeichen 6 ist der Laufweg des an den Transducer 5 eingekoppelten Ultraschallpulses 7 durch das schraubenförmig ausgebildete Verbindungselement 1 zu entnehmen. Der Transducer 5 des Ultraschallpulses 7 stellt gleichzeitig die Auskopplungsstelle eines Ultraschallpuls-Echos 8 dar. Die Zeit, die zwischen der Einkopplung eines Ultraschallpulses 7 an den Transducer 5 in das schraubenförmig ausgebildete Verbindungsbauteil 1 und der Auskopplung des Ultraschallpuls-Echos 8, ebenfalls an dem Transducer 5, vergeht, ist durch t angedeutet.

An die Signalübertragungsleitung zwischen dem als Schraube ausgebildeten Verbindungsbauteil 1 ist das mit Z bezeichnete Bauteil angeschlossen, bei dem es sich um einen Zirkulator, einen Schalter, ein Reflektometer oder eine elektrische Verbindung handeln kann. An Z ist ein Verstärker V angeschlossen, dem ein Transientenrekorder TR nachgeschaltet ist. Dieser ist mit einem Rechner PC verbunden, der seinerseits den Arbiträrgenerator AFG ansteuert. Der Arbiträrgenerator AFG seinerseits ist mit dem Z verbunden. Ein Repetitionsratengenerator RG steuert den Transientenrekorder TR und den Arbiträrgenerator AFG. Ein Taktgeber TG steuert den Arbiträrgenerator AFG, den Transientenrekorder TR und den Repetitionsratengenerator RG. Der PC ist mit Datenleitungen mit dem Arbiträrgenerator AFG und dem Transientenrekorder TR verbunden.

Der in Figur 1 dargestellte Ultraschallpuls 7 wird mit Hilfe des Arbiträrgenerators ("arbitrary function generator") AFG erzeugt. Der Rechner PC übernimmt die Einstellungen sowie die Datenerfassung und deren Verarbeitung. Der Ultraschallpuls 7 stellt eine zeitlich begrenzte, gepulste Anregung mit geeignet einstellbarer Pulsbreite und determiniertem breitbandigem "weißen" Rauschen dar. Beim breitbandigen "weißen" Rauschen bleibt der zeitliche Mittelwert der Amplitude über das Frequenzband gesehen konstant.

Im Ultraschallpuls 7 sind unter Berücksichtigung der nutzbaren Bandbreite der eingesetzten Transducer 5 alle Frequenzen mit etwa gleicher Amplitude enthalten. Die Phasenlagen sind jedoch so gewählt, dass die Amplituden beziehungsweise die Leistung in allen Frequenzbereichen über die Pulsbreite möglichst ausgeglichen verläuft. Durch die vorgegebene oder gewählte Bandbreite, die letztlich die Anstiegs- und Abfallszeit des breitbandigen Pulses begrenzt, wird eine gepulste Leistungsverteilung mit rauschförmigem Signal bei zeitlich annähernd rechteckförmigem Verlauf erzeugt.

Da die in das Verbindungsbauteil 1 einzukoppelnden Ultraschallpulse 7 mit festgelegter über die Frequenzbereiche variierender aber festgelegter Phase erzeugt werden, stehen die Phaseninformationen (zusammen mit den Signalamplituden) in Abhängigkeit von den Frequenzen des Ultraschallfrequenzspektrums zur Verfügung, um bei der Auswertung der detektierten, digitalisierten Ultraschallpuls-Echos 8 genutzt werden zu können.

Bei der Detektion der Ultraschallpuls-Echos 8 nach erfolgter gepulster Anregung mit einem Ultraschallpuls 7, wie oben beschrieben, werden die Signale über einen Transientenrekorder TR zeitaufgelöst digitalisiert und einem angeschlossenen Rechner, wie zum Beispiel einem PC oder einem Laptop, zugänglich gemacht. Bei dem Transientenrekorder TR kann in vorteilhafter Weise ein digital arbeitender Transientenrekorder TR eingesetzt werden. Im zeitlich begrenzten und daher selektierbaren Bereich der zu beobachtenden Ultraschallpuls-Echos 8 werden die in der Regel erheblich oder stark verrauschten Signale mit Hilfe von Fourier-Verfahren, wie zum Beispiel einer Fast-Fourier-Transformation, (FFT) unter Nutzung der bekannten Phasenlagen nach der Detektion und Digitalisierung komprimiert.

Bei der Detektion erfolgt die Transformation mittels eines Fourier-Verfahrens wie beispielsweise der FFT. Die Kompression erfolgt nach der Digitalisierung des empfangenen Signals über Rechner und Rechnerprogramme. Dabei wird das empfangene Signal zuerst fourier-transformiert. Dann werden die spektralen Komponenten in der Phase so verschoben, dass sich bei einer Darstellung über cosinus-Funktionen für eine mit Bezug zum Anregungszeitpunkt festgelegten Zeitpunkt bei Abwesenheit der Vorspannkraft die Phasenlage 0 ergibt. Dadurch entsteht nach der Rücktransformation an diesem Zeitpunkt ein komprimierter Puls mit markanter, maximaler Amplitude. Die Position des vom Betrag her maximalen Signals wird durch Anpassung einer Halbwelle in der Umgebung dieses Maximums bestimmt. Die Verschiebung der spektralen Komponenten und die Form der Anpassfunktion werden für das jeweilige Verbindungsbauteil 1 für alle Vorspannkräfte gleich gewählt. Die Laufzeitdifferenzen, die zur Bestimmung der Vorspannkraft benutzt werden, ergeben sich durch Differenzbildung der Ergebnisse aus der Messung aus der Spannkraft. Der Zusammenhang zwischen Vorspannkraft und die beobachtete Laufzeitdifferenzen des jeweiligen Verbindungsbauteils 1 oder ein Los oder eine Charge davon wird empirisch mit Zugmaschinen, welche die genaue Aufprägung einer Spannkraft erlauben, festgestellt. Mit dem so festgestellten Zusammenhang wird die jeweilige Einzelmessung ausgewertet und die Spannkraft angezeigt.

Das erfindungsgemäß vorgeschlagene Verfahren nutzt alle noch über die Ultraschallstrecke, d.h. den Laufweg 6 des Ultraschallpulses 7, mit Hilfe der genutzten Transducer 5 transportierbaren und detektierbaren Frequenzanteile der Signale bei jeweils maximal möglicher Amplitude in allen genutzten Frequenzbereichen.

Im Unterschied von bereits bekannten Ultraschallmessverfahren zur Messung der Reflexion, bei denen zeitlich andauernde Signale eingesetzt werden, können wegen der genutzten, zeitlich begrenzten (gepulsten) Anregung gemäß des erfindungsgemäß vorgeschlagenen Verfahrens die Beiträge unterschiedlicher Ultraschallpuls-Echos 8 zum Beispiel transversal, longitudinal erstes, zweites, n-tes Echo vor der weiteren Verarbeitung, d.h. vor der Kompression, im Zeitbereich selektiert, d.h. aus den Messdaten herausgeschnitten werden. Bei den bekannten Ultraschallmessverfahren zur Messung der Reflexion, bei denen zeitlich andauernde Signale eingesetzt werden, handelt es sich um solche mit einer niedrigen Frequenz bei elektronischen Spektrometern, die die Phasenmessung beinhalten und demzufolge ausgesprochen messzeitsensitiv sind.

Bei kurzen Ultraschallsignallaufzeiten t, wie sie zum Beispiel bei als kurzen Schrauben beschaffenen Verbindungsbauteilen 1 auftreten und/oder bei besonders breitbandig arbeitenden Transducern 5, kann zudem in vorteilhafter Weise die zu nutzende Bandbreite auf mehrere, aufeinanderfolgende pulsförmige Anregungen verteilt werden. Die Verteilung der zu nutzenden Bandbreite auf mehrere, aufeinanderfolgende pulsförmige Anregungen kann statistisch linear oder auf eine andere Weise, beispielsweise über Wichtungen bestimmter Bandbreitenbereiche erfolgen. Es wird jeweils eine zum Ultraschallpuls 7, so zum Beispiel zu dessen Pulsmitte, festgelegte Phasenlage in den einzelnen, mittels eines Fourier-Verfahrens, wie der FFT beziehungsweise nach einem anderen klassischen Auflösungsverfahren noch auflösbaren Frequenzintervall gewählt und diesem zugeordnet. Die jeweils dem Ultraschallpuls 7 zugeordnete Phasenlage ist damit auch während der weiteren Verarbeitung und insbesondere bei der Auswertung im Rahmen der Kompression der Signale bekannt.

Zum Beispiel kann in drei jeweils aufeinanderfolgenden und sich dann wiederholenden Anregungen jeweils das erste, das zweite und das dritte Drittel der gesamten Bandbreite, abhängig von der Leistungsfähigkeit der eingesetzten Transducer 5, genutzt werden. Bei der Auswertung der Signale, d.h. der Signalkompression, können die Beiträge der erwähnten drei Drittel summiert werden. Dadurch lässt sich aus den Daten ein komprimiertes Signal von optimaler kurzer Dauer und hoher Signalamplitude generieren. Prinzipiell ist auch eine statistische Verteilung über eine beliebige Anzahl von Ultraschallpulsen 7 oder jede andere Verteilung mit zu den Ultraschallpulsen 7 festgelegter Phase aller auflösbaren und/oder genutzten Frequenzintervalle möglich und kann erforderlichenfalls in vorteilhafter Weise ausgenutzt werden.

Statt wie bei dem linearen Chirp die Schwerpunkte der beteiligten Frequenzkomponenten zeitlich linear zu verteilen, können diese auch statistisch verteilt werden. Dies ist bei Signalen aus thermischer Anregung der Fall und kann durch entsprechend synthetisierte Signale auch determiniert erfolgen, auch mittels des Arbiträrgenerators AFG können solche deterministischen, rauschähnlichen Signale, auch als Pseudo-Random-Noise (prn) bezeichnet, generiert werden.

Ein Sonderfall am Pseudo-Random-Noise (prn) ist ein rauschförmiges Signal, bei dem die Amplituden der spektralen Komponenten möglichst konstant gehalten wird, jedoch die Phase bei der Synthetisierung determiniert statistisch fluktuiert. Ein solches Signal wird hier als elektrischer Puls 7 mit vorgegebener pseudo-statistischer Phasenlagen bezeichnet.

### Bezugszeichenliste

1 Verbindungsbauteil (Schraube, Bolzen)
2 Schraubenkopf
3 Schraubenschaft
4 Gewindeteil
5 Transducer
   5.1 Elektrode
   5.2 Schutzschicht
   5.3 piezoelektrischer Dünnfilm
6 Laufweg Ultraschallpuls
7 Ultraschallpuls
   t Zeit zwischen US-Puls-Einkopplung und US-Puls-Echo-Auskopplung
8 Ultraschallpuls-Echo
   Z Zirkulator, Schalter, Reflektometer oder elektrische Verbindung
   AFG (arbitrary function generator) Arbiträrgenerator
   PC Rechner
   V Verstärker
   TR Transientenrekorder
   TG Taktgeber
   RG Repetitionsratengenerator
   TG Taktgeber (clock)

## Patentansprüche

1. Verfahren zur Bestimmung der Spannkraft in Verbindungsbauteilen (1) durch Ultraschalleinkopplung mittels eines programmierbaren Arbiträrgenerators (AFG) mit nachfolgenden Verfahrensschritten:
a) Am programmierbaren Arbiträrgenerator (AFG) wird ein elektrischer Puls (7) mit vorgegebener pseudo-statistischer Phasenlage der genutzten und/oder vorgegebenen Frequenzkomponenten bei im wesentlichen konstanter Amplitude mit vorgebbarer Pulsbreite generiert,
b) die gewählte Pulsbreite ist derart an Abstände von Ultraschallpuls-Echos (8) angepasst, dass keine Überlappung einzelner unterschiedlicher Reflexe auftritt,
c) das empfangene Ultraschallpuls-Echo (8) wird bezüglich mindestens eines Reflexes zeitlich selektiert und einem für das jeweilige Verbindungsbauteil (1) festgelegten Transformationsverfahren unterworfen, derart, dass für eine definierten, mit dem Ultraschallpuls (7) in Bezug stehenden Zeitpunkt alle Frequenzbeiträge der Frequenzkomponenten zeitlich oder hinsichtlich der Phase so verschoben werden, dass
d) sich für diesen Zeitpunkt bei Abwesenheit der Vorspannkraft immer die Phasenlage 0° oder immer die Phasenlage 180° (π) bei Darstellung der Frequenzkomponenten über cosinus-Funktionen ergibt.

2. Verfahren zur Bestimmung der Spannkraft in Verbindungsbauteilen (1) durch Ultraschalleinkopplung mittels eines programmierbaren Arbiträrgenerators (AFG) mit nachfolgenden Verfahrensschritten:
a) am programmierbaren Arbiträrgenerator (AFG) wird ein elektrischer Puls (7) in Form eines linearen Chirps der genutzten und/oder vorgegebenen Frequenzkomponenten bei im wesentlichen konstanter Amplitude mit vorgebbarer Pulsbreite generiert,
b) die gewählte Pulsbreite ist derart an Abstände von Ultraschallpuls-Echos (8) angepasst, dass keine Überlappung einzelner unterschiedlicher Reflexe auftritt,
c) das empfangene Ultraschallpuls-Echo (8) wird bezüglich mindestens eines Reflexes zeitlich selektiert und einem für das jeweilige Verbindungsbauteil (1) festgelegten Transformationsverfahren unterworfen, derart, dass für einen definierten, mit dem Ultraschallpuls (7) in Bezug stehenden Zeitpunkt alle Frequenzbeiträge der Frequenzkomponenten zeitlich oder hinsichtlich der Phase so verschoben werden, dass
d) sich für diesen Zeitpunkt bei Abwesenheit der Vorspannkraft immer die Phasenlage 0° oder immer die Phasenlage 180° (π) bei Darstellung der Frequenzkomponenten über cosinus-Funktionen ergibt.

3. Verfahren zur Bestimmung der Spannkraft in Verbindungsbauteilen (1) durch Ultraschalleinkopplung mittels eines programmierbaren Arbiträrgenerators (AFG) mit nachfolgenden Verfahrensschritten:
a) am programmierbaren Arbiträrgenerator (AFG) wird ein elektrischer Puls (7) als pseudo-random-noise der genutzten und/oder vorgegebenen Frequenzkomponenten bei im wesentlichen konstanter Amplitude mit vorgebbarer Pulsbreite generiert,
b) die gewählte Pulsbreite ist derart an Abstände von Ultraschallpuls-Echos (8) angepasst, dass keine Überlappung einzelner unterschiedlicher Reflexe auftritt,
c) das empfangene Ultraschallpuls-Echo (8) wird bezüglich mindestens eines Reflexes zeitlich selektiert und einem für das jeweilige Verbindungsbauteil (1) festgelegten Transformationsverfahren unterworfen, derart, dass für einen definierten, mit dem Ultraschallpuls (7) in Bezug stehenden Zeitpunkt alle Frequenzbeiträge der Frequenzkomponenten zeitlich oder hinsichtlich der Phase so verschoben werden, dass
d) sich für diesen Zeitpunkt bei Abwesenheit der Vorspannkraft immer die Phasenlage 0° oder immer die Phasenlage 180° (π) bei Darstellung der Frequenzkomponenten über cosinus-Funktionen ergibt.

4. Verfahren gemäß Anspruch 2 **dadurch gekennzeichnet, dass** über die genutzte Pulsbreite die zeitliche Lage des Schwerpunktes der Frequenzbeiträge bezüglich der Frequenz eine stetige Funktion ist.

5. Verfahren gemäß der Ansprüche 1, 2 oder 3, **dadurch gekennzeichnet, dass** gemäß Verfahrensschritt c) als definierter, mit dem Ultraschallpuls (7) in Bezug stehender Zeitpunkt die Pulsmitte oder der Pulsanfang oder das Pulsende gewählt werden.

6. Verfahren gemäß der Ansprüche 1, 2 oder 3, **dadurch gekennzeichnet, dass** gemäß Verfahrensschritt a) Frequenzinhalte auf eine Vielzahl von aufeinander folgenden Ultraschallpulsen (7) verteilt werden.

7. Verfahren gemäß Anspruch 6, **dadurch gekennzeichnet, dass** die Frequenzinhalte auf 2 bis 100 Ultraschallpulse (7) verteilt werden.

8. Verfahren gemäß der Ansprüche 6 oder 7, **dadurch gekennzeichnet, dass** Messungen über einzelne Teilfrequenzbereiche im Frequenzspektrum des Ultraschallpulses (7) zusammengefasst werden, aus denen die Synthetisierung eines sich aus allen Einzelbeiträgen ergebenden kurzen Signals erfolgt.

9. Verfahren gemäß der Ansprüche 1, 2 oder 3, **dadurch gekennzeichnet, dass** der Ultraschallpuls (7) ein maximal anregbares Ultraschallfrequenzspektrum aufweist, mit welchem ein Spektrum von maximal anregbarer Bandbreite angeregt wird.

10. Verfahren gemäß der Ansprüche 1, 2 oder 3, **dadurch gekennzeichnet, dass** zur Erzeugung des Ultraschallpulses (7) ein Arbiträrgenerator (AFG) oder DDS-Chips (Dynamic Digital Synthese) oder zeitgleich ein- und ausgeschaltete VCO's (Voltage Controlled Oszillator) eingesetzt werden und zur Detektion des Ultraschallpuls-Echos (8) ein digitalisierender Transientenrekorder (TR) eingesetzt wird.

11. Verfahren gemäß Anspruch 10, **dadurch gekennzeichnet, dass** der Arbiträrgenerator (AFG) und der Transientenrekorder (TR) vom gleichen Taktgeber (TG) gesteuert werden.

12. Verfahren gemäß Anspruch 11, **dadurch gekennzeichnet, dass** von dem Taktgeber (TG) eine Repetitionsrate für die jeweiligen Einzelmessungen abgeleitet wird.

13. Verfahren gemäß Anspruch 9, **dadurch gekennzeichnet, dass** in einer Anzahl von aufeinanderfolgenden und sich wiederholenden Ultraschallpulsen (7) jeweils eine dem Kehrwert der Anzahl entsprechende unterschiedliche, sich wechselseitig ausschließende und ergänzende Bandbreite genutzt wird.

14. Verfahren gemäß der Ansprüche 1, 2 oder 3, **dadurch gekennzeichnet, dass** durch zeitlich ausgedehnte Anregung die Anregungsspannung minimal gehalten wird und so die Lebensdauer des Transducers (5) verlängert wird.

15. Vorrichtung zur Durchführung des Verfahrens gemäß einem oder mehrerer der vorhergehenden Ansprüche, **dadurch gekennzeichnet, dass** diese einen Prozessor oder einen Mikroprozessor enthält sowie einen programmierbaren Arbiträrgenerator (AFG) sowie einen digitalisierenden Transientenrekorder (TR) mit Verbindung zum Prozessor oder zum Mikroprozessor und einen Repetitionsratengenerator (RG) umfasst.

16. Vorrichtung gemäß Anspruch 15, **dadurch gekennzeichnet, dass** der Arbiträrgenerator (AFG) und der Transientenrekorder (TR) mit ein und demselben Taktgeber (TG) betrieben werden.

17. Vorrichtung gemäß Anspruch 15, **dadurch gekennzeichnet, dass** der Arbiträrgenerator (AFG), der Transientenrekorder (TR) und der Repetitionsratengenerator (RG) mit einem gemeinsamen Taktgeber (TG) betrieben werden.

18. Vorrichtung gemäß der Ansprüche 15, 16 oder 17, **dadurch gekennzeichnet, dass** dem Arbiträrgenerator (AFG) ein Leistungsverstärker nachgeordnet ist.

19. Vorrichtung gemäß der Ansprüche 15, 16 oder 17, **dadurch gekennzeichnet, dass** dem Transientenrekorder (TR) ein Vorverstärker oder ein bezüglich der Verstärkung programmierbarer Vorverstärker mit Verbindung zum Rechner vorgeschaltet ist.

20. Vorrichtung gemäß der Ansprüche 15, 16, oder 17, **dadurch gekennzeichnet, dass** der Prozessor oder der Mikroprozessor in einem Personalcomputer (PC) oder einem Laptop enthalten ist.

## Claims

1. Method for determining the tension in connecting parts (1) by injecting ultrasound using a programmable arbitrary generator (AFG), having the following method steps:
a) the programmable arbitrary generator (AFG) is used to generate an electrical pulse (7) with a prescribed pseudo-statistical phase for the frequency components used and/or prescribed at essentially constant amplitude with a prescribable pulse width,
b) the chosen pulse width matches intervals between ultrasound pulse echoes (8) such that no overlap occurs between individual different reflexes,
c) the received ultrasound pulse echo (8) is selected in time for at least one reflex and is subjected to a transformation method, which has been stipulated for the respective connecting part (1), such that for a defined time related to the ultrasound pulse (7), all the frequency contributions from the frequency components are shifted in time or in respect of phase such that
d) for this time, in the absence of the initial tension, the phase angle 0° or the phase angle 180° (π) is always obtained when the frequency components are represented over cosine functions.

2. Method for determining the tension in connecting parts (1) by injecting ultrasound using a programmable arbitrary generator (AFG), having the following method steps:
a) the programmable arbitrary generator (AFG) is used to generate an electrical pulse (7) in the form of a linear chirp for the frequency components used and/or prescribed at essentially constant amplitude with a prescribable pulse width,
b) the chosen pulse width matches intervals between ultrasound pulse echoes (8) such that no overlap occurs between individual different reflexes,
c) the received ultrasound pulse echo (8) is selected in time for at least one reflex and is subjected to a transformation method, which has been stipulated for the respective connecting part (1), such that for a defined time related to the ultrasound pulse (7), all the frequency contributions from the frequency components are shifted in time or in respect of phase such that
d) for this time, in the absence of the initial tension, the phase angle 0° or the phase angle 180° (π) is always obtained when the frequency components are represented over cosine functions.

3. Method for determining the tension in connecting parts (1) by injecting ultrasound using a programmable arbitrary generator (AFG), having the following method steps:
a) the programmable arbitrary generator (AFG) is used to generate an electrical pulse (7) in the form of pseudo-random noise for the frequency components used and/or prescribed at essentially constant amplitude with a prescribable pulse width,
b) the chosen pulse width matches intervals between ultrasound pulse echoes (8) such that no overlap occurs between individual different reflexes,
c) the received ultrasound pulse echo (8) is selected in time for at least one reflex and is subjected to a transformation method, which has been stipulated for the respective connecting part (1), such that for a defined time related to the ultrasound pulse (7), all the frequency contributions from the frequency components are shifted in time or in respect of phase such that
d) for this time, in the absence of the initial tension, the phase angle 0° or the phase angle 180° (π) is always obtained when the frequency components are represented over cosine functions.

4. Method according to Claim 2, **characterized in that** the position in time of the focus of the frequency contributions over the pulse width used is a constant function in respect of the frequency.

5. Method according to Claim 1, 2 or 3, **characterized in that** according to method step c) the defined time related to the ultrasound pulse (7) which is chosen is the pulse middle or the pulse start or the pulse end.

6. Method according to Claim 1, 2 or 3, **characterized in that** according to method step a) frequency contents are distributed over a multiplicity of successive ultrasound pulses (7).

7. Method according to Claim 6, **characterized in that** the frequency contents are distributed over 2 to 100 ultrasound pulses (7).

8. Method according to Claim 6 or 7, **characterized in that** measurements over individual frequency range sections in the frequency spectrum of the ultrasound pulse (7) are combined and are used to synthesize a short signal resulting from all the individual contributions.

9. Method according to Claim 1, 2 or 3, **characterized in that** the ultrasound pulse (7) has a maximally excitable ultrasound frequency spectrum which is used to excite a spectrum of maximally excitable bandwidth.

10. Method according to Claim 1, 2 or 3, **characterized in that** the ultrasound pulse (7) is produced using an arbitrary generator (AFG) or DDS (Dynamic Digital Synthesis) chip or simultaneously on and off VCOs (Voltage Controlled Oscillator), and the ultrasound pulse echo (8) is detected using a digitizing transient recorder (TR).

11. Method according to Claim 10, **characterized in that** the arbitrary generator (AFG) and the transient recorder (TR) are controlled by the same clock generator (TG).

12. Method according to Claim 11, **characterized in that** the clock generator (TG) derives a repetition rate for the respective individual measurements.

13. Method according to Claim 9, **characterized in that** a number of successive and repeated ultrasound pulses (7) involve the use of a respective different, mutually exclusive and complementary bandwidth which corresponds to the reciprocal of the number.

14. Method according to Claim 1, 2 or 3, **characterized in that** prolonged excitation keeps the excitation voltage at a minimum and thus extends the life of the transducer (5).

15. Apparatus for carrying out the method according to one or more of the preceding claims, **characterized in that** it contains a processor or a microprocessor and also comprises a programmable arbitrary generator (AFG) and also comprises a digitizing transient recorder (TR) with a connection to the processor or to the microprocessor and comprises a repetition rate generator (RG).

16. Apparatus according to Claim 15, **characterized in that** the arbitrary generator (AFG) and the transient recorder (TR) are operated using one and the same clock generator (TG).

17. Apparatus according to Claim 15, **characterized in that** the arbitrary generator (AFG), the transient recorder (TR) and the repetition rate generator (RG) are operated using a common clock generator (TG).

18. Apparatus according to Claim 15, 16 or 17, **characterized in that** the arbitrary generator (AFG) has a downstream power amplifier.

19. Apparatus according to Claim 15, 16 or 17, **characterized in that** the transient recorder (TR) has an upstream preamplifier or an upstream preamplifier which can be programmed in respect of gain and which is connected to the computer.

20. Apparatus according to Claim 15, 16 or 17, **characterized in that** the processor or the microprocessor is contained in a personal computer (PC) or a laptop.

## Revendications

1. Procédé pour déterminer la force de tension dans des composants d'assemblage (1) par injection d'ultrasons au moyen d'un générateur arbitraire (AFG) programmable, comprenant les étapes suivantes :
a) sur le générateur arbitraire (AFG) programmable est générée une impulsion électrique (7) avec une position de phase pseudostatique prédéfinie des composantes fréquentielles utilisées et/ou prédéfinies et une amplitude sensiblement constante, et avec une largeur d'impulsion prédéfinissable,
b) la largeur d'impulsion choisie est adaptée aux intervalles entre les échos (8) de l'impulsion ultrasonore de façon à ce qu'il n'y ait pas de chevauchement des différentes réflexions individuelles,
c) l'écho reçu (8) de l'impulsion ultrasonore est sélectionné en fonction du temps relativement à au moins une réflexion et soumis à un processus de transformation fixé pour le composant d'assemblage (1) respectif, de telle sorte que pour un moment défini en rapport avec l'impulsion ultrasonore (7), toutes les contributions fréquentielles des composantes fréquentielles sont décalées dans le temps ou par rapport à la phase de façon telle que
d) l'on obtient pour ce moment, en l'absence de la force de prétension, toujours la position de phase 0° ou toujours la position de phase 180° (π), lorsque les composantes fréquentielles sont représentées par des fonctions cosinus.

2. Procédé pour déterminer la force de tension dans des composants d'assemblage (1) par injection d'ultrasons au moyen d'un générateur arbitraire (AFG) programmable, comprenant les étapes suivantes :
a) sur le générateur arbitraire (AFG) programmable est générée une impulsion électrique (7) sous forme d'un chirp linéaire des composantes fréquentielles utilisées et/ou prédéfinies avec une amplitude sensiblement constante, et avec une largeur d'impulsion prédéfinissable,
b) la largeur d'impulsion choisie est adaptée aux intervalles entre les échos (8) de l'impulsion ultrasonore de façon à ce qu'il n'y ait pas de chevauchement des différentes réflexions individuelles,
c) l'écho reçu (8) de l'impulsion ultrasonore est sélectionné en fonction du temps relativement à au moins une réflexion et soumis à un processus de transformation fixé pour le composant d'assemblage (1) respectif, de telle sorte que pour un moment défini en rapport avec l'impulsion ultrasonore (7), toutes les contributions fréquentielles des composantes fréquentielles sont décalées dans le temps ou par rapport à la phase de façon telle que
d) l'on obtient pour ce moment, en l'absence de la force de prétension, toujours la position de phase 0° ou toujours la position de phase 180° (π), lorsque les composantes fréquentielles sont représentées par des fonctions cosinus.

3. Procédé pour déterminer la force de tension dans des composants d'assemblage (1) par injection d'ultrasons au moyen d'un générateur arbitraire (AFG) programmable, comprenant les étapes suivantes :
a) sur le générateur arbitraire (AFG) programmable est générée une impulsion électrique (7) comme pseudo-random-noise des composantes fréquentielles utilisées et/ou prédéfinies avec une amplitude sensiblement constante, et avec une largeur d'impulsion prédéfinissable,
b) la largeur d'impulsion choisie est adaptée aux intervalles entre les échos (8) de l'impulsion ultrasonore de façon à ce qu'il n'y ait pas de chevauchement des différentes réflexions individuelles,
c) l'écho reçu (8) de l'impulsion ultrasonore est sélectionné en fonction du temps relativement à au moins une réflexion et soumis à un processus de transformation fixé pour le composant d'assemblage (1) respectif, de telle sorte que pour un moment défini en rapport avec l'impulsion ultrasonore (7), toutes les contributions fréquentielles des composantes fréquentielles sont décalées dans le temps ou par rapport à la phase de façon telle que
d) l'on obtient pour ce moment, en l'absence de la force de prétension, toujours la position de phase 0° ou toujours la position de phase 180° (π), lorsque les composantes fréquentielles sont représentées par des fonctions cosinus.

4. Procédé selon la revendication 2, **caractérisé en ce que** sur la largeur d'impulsion utilisée, la position temporelle du centre de gravité des contributions fréquentielles relativement à la fréquence est une fonction continue.

5. Procédé selon la revendication 1, 2 ou 3, **caractérisé en ce que** suivant l'étape c) du procédé, on choisit comme moment défini en rapport avec l'impulsion ultrasonore (7) le milieu de l'impulsion ou le début de l'impulsion ou la fin de l'impulsion.

6. Procédé selon la revendication 1, 2 ou 3, **caractérisé en ce que** suivant l'étape a) du procédé, on répartit les contenus fréquentiels sur une pluralité d'impulsions ultrasonores (7) se succédant.

7. Procédé selon la revendication 6, **caractérisé en ce que** l'on répartit les contenus fréquentiels sur 2 à 100 impulsions ultrasonores (7).

8. Procédé selon la revendication 6 ou 7, **caractérisé en ce que** des mesures sur des gammes de fréquences partielles sont regroupées dans le spectre de fréquences de l'impulsion ultrasonore (7), mesures à partir desquelles est synthétisé un signal court résultant de toutes les contributions individuelles.

9. Procédé selon la revendication 1, 2 ou 3, **caractérisé en ce que** l'impulsion ultrasonore (7) présente un spectre de fréquences ultrasonores apte à subir une excitation maximale, lequel est utilisé pour exciter un spectre d'une largeur de bande apte à subir une excitation maximale.

10. Procédé selon la revendication 1, 2 ou 3, **caractérisé en ce que** pour produire l'impulsion ultrasonore (7), on utilise un générateur arbitraire (AFG) ou des chips DDS (Dynamic Digital Synthese) ou des VCO (Voltage Controlled Oszillator) simultanément activés et désactivés, et pour détecter l'écho (8) de l'impulsion ultrasonore, on utilise un numériseur/enregistreur de transitoires (TR).

11. Procédé selon la revendication 10, **caractérisé en ce que** le générateur arbitraire (AFG) et l'enregistreur de transitoires (TR) sont commandés par la même horloge (TG).

12. Procédé selon la revendication 11, **caractérisé en ce que** de l'horloge (TG) est déduit un taux de répétition pour les mesures individuelles respectives.

13. Procédé selon la revendication 9, **caractérisé en ce que** dans un nombre d'impulsions ultrasonores (7) se succédant et se répétant, on utilise à chaque fois une largeur de bande différente correspondant à l'inverse dudit nombre, s'excluant et se complétant mutuellement.

14. Procédé selon la revendication 1, 2 ou 3, **caractérisé en ce que** grâce à une excitation prolongée, la tension d'excitation est maintenue minimale et la durée de vie du transducteur (5) est ainsi prolongée.

15. Dispositif pour la mise en oeuvre du procédé selon l'une ou plusieurs des revendications précédentes, **caractérisé en ce qu'**il comporte un processeur ou un microprocesseur ainsi qu'un générateur arbitraire (AFG) programmable et un numériseur/enregistreur de transitoires (TR) disposant d'une connexion avec le processeur ou le microprocesseur, et un générateur de taux de répétition (RG).

16. Dispositif selon la revendication 15, **caractérisé en ce que** l'on fait fonctionner le générateur arbitraire (AFG) et l'enregistreur de transitoires (TR) avec une seule et même horloge (TG).

17. Dispositif selon la revendication 15, **caractérisé en ce que** l'on fait fonctionner le générateur arbitraire (AFG), l'enregistreur de transitoires (TR) et le générateur de taux de répétition (RG) avec une horloge (TG) commune.

18. Dispositif selon l'une des revendications 15, 16 ou 17, **caractérisé en ce qu'**un amplificateur de puissance est disposé en aval du générateur arbitraire (AFG).

19. Dispositif selon la revendication 15, 16 ou 17, **caractérisé en ce qu'**un préamplificateur, ou un préamplificateur programmable en ce qui concerne l'amplification, disposant d'une connexion avec l'ordinateur, est monté en amont de l'enregistreur de transitoires (TR).

20. Dispositif selon la revendication 15, 16 ou 17, **caractérisé en ce que** le processeur ou le microprocesseur est compris dans un ordinateur personnel (PC) ou un ordinateur portable.
